# EUROPÄISCHE PATENTSCHRIFT

(11) **EP 2 812 201 B1**
(45) Veröffentlichungstag und Bekanntmachung des Hinweises auf die Patenterteilung: **18.05.2016**
(21) Anmeldenummer: 12794196.1
(22) Anmeldetag: 21.11.2012
(51) Int. Cl.: B60K 26/02, B60K 37/06, B60W 50/08, B60W 50/16

(54) **KRAFTWAGEN MIT EINER FAHRERASSISTENZEINRICHTUNG UND VERFAHREN ZUM BETREIBEN EINES KRAFTWAGENS**
AUTOMOBILE INCLUDING A DRIVER ASSISTANCE SYSTEM AND METHOD FOR OPERATING AN AUTOMOBILE
VÉHICULE AUTOMOBILE COMPRENNANT UN SYSTÈME D'ASSISTANCE DU CONDUCTEUR ET PROCÉDÉ POUR OPÉRÉR UN VÉHICULE AUTOMOBILE

(30) Priorität: 06.02.2012 DE 102012002307
(43) Veröffentlichungstag der Anmeldung: 17.12.2014
(73) Patentinhaber: Audi AG, 85045 Ingolstadt (DE)
(72) Erfinder: FÄRBER, Berthold, 85625 Glonn (DE); WIMMER, Martin, 93049 Regensburg (DE); SIEDERSBERGER,Karl-Heinz, 86669 Königsmoos (DE); SACHER, Heike, 80797 München (DE); SCHEIFFERT, Fabian, 71384 Weinstadt (DE)
(74) Vertreter: Brandt, Kai
(86) Internationale Anmeldenummer: PCT/EP2012/004816
(87) Internationale Veröffentlichungsnummer: WO 2013/117205

(56) Entgegenhaltungen:
- EP-A1- 1 980 441
- DE-A1- 10 209 846
- DE-A1-102004 019 893
- DE-A1-102006 018 537
- DE-A1-102008 014 879
- DE-A1-102010 053 889

## Beschreibung

Die Erfindung betrifft einen Kraftwagen mit einer Fahrerassistenzeinrichtung, welche dazu ausgelegt ist, den Kraftwagen selbständig während einer Fahrt des Kraftwagens zu führen und welche hierbei zwischen zumindest zwei Assistenzmodi umschaltbar ist, die sich in einem Grad der Selbständigkeit der Fahrerassistenzeinrichtung beim Führen des Kraftwagens voneinander unterscheiden. Der Begriff "Führen des Kraftwagens" umfasst hierbei zum einen das Lenken des Kraftwagens (Folgen eines Straßenverlaufs, Ausrichten des Kraftwagens innerhalb einer Spur, Spurwechselmanöver), was auch als Querführung bezeichnet wird, und zum anderen das Steuern der Fahrgeschwindigkeit des Kraftwagens (Beschleunigen, Bremsen, Notbremsen, Beibehalten der Geschwindigkeit), was auch als Längsführung bezeichnet wird. Zu der Erfindung gehört auch ein Verfahren zum Betreiben eines Kraftwagens, durch welches eine Bedienung eines Fahrerassistenzsystems des Kraftwagens ermöglicht wird.

Ein Fahrerassistenzsystem der genannten Art ist aus der DE 10 2010 022 433 A1 bekannt. Danach kann ein Fahrerassistenzsystem in einem vollautomatischen Assistenzmodus die Führung des Fahrzeugs vollständig selbstständig ausführen. Der Fahrer des Kraftwagens muss dann während der Fahrt weder das Lenkrad noch die Pedalen des Kraftwagens bedienen und kann daher für eine verhältnismäßig lange Zeitdauer seine Aufmerksamkeit anderen Dingen widmen, wie beispielsweise der Bedienung eines Infotainmentsystems.

Unter einem selbständigen Führen des Kraftwagens ist im Zusammenhang mit der Erfindung aber auch ein teilautomatischer Assistenzmodus zu verstehen, bei welchem der Grad der Selbständigkeit des Fahrerassistenzsystems bei der Führung des Kraftwagens verringert ist und welcher dann beispielsweise lediglich in der Funktionalität bestehen kann, die Fahrgeschwindigkeit des Kraftwagens auf eine Soll- oder Setzgeschwindigkeit einzuregeln, welche der Fahrer durch Einstellen eines Werts des entsprechenden Fahrparameters des Fahrerassistenzsystems vorgibt (Fahrgeschwindigkeitsregelung).

Ein weiterer wünschenswerter Assistenzmodus ist die autonome Führung des Kraftwagens durch eine Fahrerassistenzeinrichtung. Im Unterschied zum vollautomatischen Assistenzmodus wird im autonomen Assistenzmodus durch die Fahrerassistenzeinrichtung auch darüber entschieden, welche Werte bei den Fahrparametern (Sollabstände, Sollgeschwindigkeit) für ein momentan ausgeführtes Fahrmanöver und/oder welche Fahrmanöver (Spurwechsel, Abbiegen, Einparken und dergleichen) auszuführen sind. Im vollautomatischen Assistenzmodus ist dagegen vorgesehen, dass der Fahrer über eine Benutzerschnittstelle vorgibt, welche Fahrmanöver auszuführen sind bzw. welche Abstände und Geschwindigkeiten bei einem momentan ausgeführtes Fahrmanöver durch die Fahrerassistenzeinrichtung beim Befahren einer Fahrspur eingeregelt werden sollen. Ein anderer Unterschied zwischen den beiden Assistenzmodi kann darin bestehen, wie die Fahrerassistenzeinrichtung bei einer unvorhergesehenen Entwicklung des Verkehrsgeschehens reagiert, wenn also eine sichere Führung durch die Fahrerassistenzeinrichtung nicht mehr gewährleistet ist. Im vollautomatischen Assistenzmodus ist dann vorgesehen, dass sich die Fahrerassistenzeinrichtung deaktiviert und die Kontrolle über den Kraftwagen an den Fahrer abgibt, während dagegen im autonomen Assistenzmodus der Kraftwagen durch die Fahrerassistenzeinrichtung selbst in einen sicheren Zustand gebracht wird, indem der Kraftwagen z.B. angehalten wird.

Je nach momentan aktivem Assistenzmodus werden während der Fahrt bestimmte Führungsaufgaben von dem Kraftwagen selbständig durchgeführt, d.h. ohne ein Zutun des Fahrers. Hierbei muss aber für jeden Assistenzmodus, in welchem die Fahrerassistenzeinrichtung betreibbar ist, sichergestellt sein, dass dem Fahrer stets klar ist, bis zu welchem Grad das Fahrerassistenzsystem den Kraftwagen überwacht und führt, welche Eingriffsmöglichkeiten dem Fahrer selbst beim Führen des Kraftwagens noch gegeben sind und welche Führungsaufgaben der Fahrer zwingend selbst ausführen muss. Verliert der Fahrer hierbei die Übersicht, kann es zu einer Gefährdung seiner Sicherheit kommen. Wähnt der Fahrer beispielsweise die Fahrerassistenzeinrichtung im vollautomatischen Assistenzmodus und lässt er deshalb das Lenkrad los, um sich mit dem Infotainmentsystem zu beschäftigen, kann hierbei das Fahrzeug von der Fahrbahn abkommen, weil die Fahrerassistenzeinrichtung z.B. überhaupt nicht aktiviert ist, das heißt eine vollständig manuelle Fahrweise von dem Fahrer verlangt ist (hier deshalb als manueller Assistenzmodus bezeichnet).

Das Spektrum der von der manuellen Fahrt über die Teil- und Vollautomation bis hin zur Autonomie reichenden Selbständigkeit der Fahrerassistenzeinrichtung (Automationsspektrum) soll in seiner Komplexität künftig für den Nutzer transparent und verständlich bedienbar sein. Eine handhabbare Komplexität dieser vier genannten Assistenzmodi, eine klare Abgrenzbarkeit der einzelnen Assistenzmodi sowie charakteristische Bedienmodalitäten innerhalb der einzelnen Assistenzmodi sind wichtige Eigenschaften zukünftiger Bedienkonzepte. Während für die Teilautomation (z.B. Fahrgeschwindigkeitsregelung, Active-Lane-Control, d.h. Spurhalteassistenz) etablierte Bedienelemente wie Tasten, Lenkrad oder Hebel zur Verfügung stehen, gibt es für die prototypische Bedienung der Vollautomation und der Autonomie bisher lediglich konzeptionelle Ansätze. Diese Ansätze sind häufig lediglich Ergänzungen beziehungsweise Erweiterungen bestehender Bedienkonzepte und stellen isolierte Insellösungen dar. Solche Insellösungen erschöpfen sich in der Regel in bloßer Funktionsintegration in bestehende Bedienelemente, was zu einer Vergrößerung der Funktionsdichte der einzelnen Bedienelemente führt und so aufgrund der Vielfalt und Komplexität der hieraus resultierenden Bedieneinrichtungen nicht zielführend ist. Die Handhabbarkeit und Funktionsvielfalt aktueller Bedienelemente ist bereits ausgereizt.

DE 102010053889 A offenbart einer Kraftwagen gemäß den Oberbegriff des Anspruchs 1. Eine Aufgabe der vorliegenden Erfindung ist es, bei einem Kraftwagen mit einer Fahrerassistenzeinrichtung, das den Kraftwagen ganz oder teilweise selbständig führen kann, die Übersichtlichkeit bei deren Bedienung zu gewährleisten.

Die Aufgabe wird durch einen Kraftwagen gemäß Patentanspruch 1 und ein Verfahren gemäß Patentanspruch 12 gelöst. Vorteilhafte Weiterbildungen des erfindungsgemäßen Kraftwagens sind durch die Unteransprüche gegeben.

Bei dem erfindungsgemäßen Kraftwagen weist eine Fahrerassistenzeinrichtung ein Griffelement, also beispielsweise einen Hebel, auf, der in einem für einen Fahrer des Kraftwagens primären Greifraum angeordnet ist und auf dem eine Mehrzahl von Bedienelementen der Fahrerassistenzeinrichtung angeordnet ist. Unter einem primären Greifraum ist hier allgemein derjenige Bereich des Kraftwagens zu verstehen, den der Fahrer in einer entspannt zurückgelehnten Haltung vom Fahrersitz aus mit einer Hand erreichen kann, also etwa die Mittelkonsole oder die Fahrertür des Kraftwagens. An dem Griffelement kann sich ein Fahrer beim Führen des Kraftwagens orientieren, wenn er wissen möchte, in welchem Assistenzmodus sich die Fahrerassistenzeinrichtung gerade befindet. Das Griffelement ist hierzu bezüglich der Innenverkleidung des Kraftwagens, d.h. eines Gehäuses der Mittelkonsole bzw. einer Verkleidung der Seitentür, durch einen Aktor der Bedieneinrichtung bewegbar. Eine Steuereinrichtung der Fahrerassistenzeinrichtung ist dazu ausgebildet, eine Position des Griffelements bezüglich Innenverkleidung durch Ansteuern des Aktors aktiv einzustellen, wobei sich die verbesserte Orientierung des Fahrers bei der Bedienung der Fahrerassistenzeinrichtung eben gemäß dem erfindungsgemäßen Verfahren dadurch ergibt, dass die Position des Griffelements durch die Steuereinrichtung mittels der Aktoren in Abhängigkeit davon eingestellt wird, welcher Assistenzmodus momentan aktiv ist. Durch das Einstellen der Position wird die relative Lage des Griffelements bezüglich des Fahrers verändert, so dass der Fahrer einfach nur eine Hand an das Griffelement legen muss, um sich darüber klar zu werden, welche in welchem Assistenzmodus sich die Fahrerassistenzeinrichtung momentan befindet und welcher Bedienmöglichkeiten er überhaupt hat. Befindet sich das Griffelement beispielsweise in der Position, welche den vollautomatischen Assistenzmodus anzeigt, weiß der Fahrer intuitiv, dass er nun das Fahrzeug nicht mehr aktiv zu lenken braucht und das Fahrverhalten des Kraftwagens nur noch über das Griffelement steuern muss. Er kann also das Lenkrad in diesem Fall loslassen und muss auch nicht erschrecken, wenn das Fahrzeug auf eine Bedienung des Lenkrads hin nicht mehr reagiert.

Das erfindungsgemäße Konzept von einem aktiv verstellbaren Griffelement mit darin integrierten Bedienelementen weist den Vorteil auf, dass die Bedienung des Automationsspektrums (manuelle Fahrt, teil- und vollautomatischer Assistenzmodus sowie autonomer Assistenzmodus) die Orientierung anhand des einzigen Griffelements bietet: Die Position des Griffelements sowie die Bedieneigenschaften der einzelnen Bedienelemente sind variabel und abhängig vom aktuell gewählten Assistenzmodus adaptierbar.

Eine vorteilhafte Ausführungsform des erfindungsgemäßen Kraftwagens sieht vor, dass das Griffelement an einer seiner Stirnseiten, welche einem Fahrersitz des Kraftwagens zugewandt ist, wenigstens eines der Bedienelemente aufweist. Dieses ist bevorzugt ein Tastschalter, der beispielsweise als Wippe ausgestaltet sein kann. Wenn der Fahrer das Griffelement umgreift, kann er dieses Bedienelement ganz einfach mit dem Daumen betätigen. In zumindest einem der Assistenzmodi wird das Bedienelement dabei in der Weise betrieben, dass sich mit ihm ein Fahrparameter des Fahrerassistenzsystems einstellen lässt, von welchem das Führverhalten der Fahrerassistenzeinrichtung abhängig ist. So kann beispielsweise vorgesehen sein, dass im teilautomatischen Assistenzmodus mittels des Bedienelements die Soll- oder Setzgeschwindigkeit für eine Fahrgeschwindigkeitregelung eingestellt wird. Diese Ausführungsform des erfindungsgemäßen Kraftwagens weist den Vorteil auf, dass durch Verändern der Position des Griffelements das Bedienelement nur dann für den Fahrer einfach greifbar ist, sich diesem also anbietet, wenn sich das Griffelement auch in der zum teilautomatischen Assistenzmodus gehörenden Position befindet. In einem anderen Assistenzmodus, in welchem das Bedienelement keine Funktion hat, lässt sich das Bedienelement dann aus dem primären Griffbereich des Fahrers, welchen er während der Fahrt und ohne Blickabwendung vom Verkehr einfach erreichen kann, herausschwenken. Dann ist vermieden, dass der Fahrer versehentlich im falschen Assistenzmodus versucht, eine Bedienhandlung an dem Bedienelement vorzunehmen.

Zum Wechseln zwischen zwei Assistenzmodi weist das Griffelement zweckmäßigerweise ein Bedienelement an einer Seite auf, welche für den Benutzer der Bedieneinrichtung zumindest in einer überwiegenden Anzahl der möglichen Positionen des Griffelements erreichbar ist. Beispielsweise kann hier an einer Oberseite des Griffelements eine Taste vorgesehen sein. Der Fahrer kann also in vorteilhafter Weise ohne Abwendung des Blickes vom Verkehr nach dem Griffelement greifen, anhand von dessen Position den momentan aktiven Assistenzmodus erkennen und dann sofort durch Bedienen des Bedienelements den "nächst höheren" Assistenzmodus aktivieren, das heißt den Grad der Selbständigkeit der Fahrerassistenzeinrichtung vergrößern. Als besonders günstig hat sich hier eine Sensortaste erwiesen, mittels welcher zuverlässig unterschieden werden kann, ob der Fahrer seine Hand auf dem Griffelement nur abgelegt hat oder ob er tatsächlich die Sensortaste betätigen möchte. Hierdurch wird zugleich auch eine Haltung der Hand beim Bedienen des Sensors erzwungen (senkrechtes Antippen der Taste), bei welcher vermieden ist, dass die Hand beim automatischen Verfahren der Bedieneinrichtung eingeklemmt wird. Geeignete Sensortasten basieren z.B. auf einem kapazitiven Sensor oder einem Infrarotsensor.

Als besonders vorteilhaft hat es sich herausgestellt, wenn nicht nur die einzelnen Bedienelemente, sondern auch das Griffelement selbst zur Bedienung der Fahrerassistenzeinrichtung nutzbar gemacht wird. Hierzu kann das Griffelement in zumindest einem Assistenzmodus als Steuerhebel betrieben werden, welcher durch rotatorisches Auslenken (z.B. Kippen) und/oder Drehen und/oder translatorisches Auslenken quer zu einer Hochachse des Kraftwagens monostabil auslenkbar ist. Mit anderen Worten wird das Griffelement hier als eine Art "Joystick" nutzbar. Die Auslenkung erfolgt dabei dann bezüglich derjenigen Position, in die das Griffelement in dem jeweiligen Assistenzmodus durch die Steuereinrichtung ursprünglich gebracht worden ist. Insbesondere im Zusammenhang mit einem vollautomatischen Assistenzmodus ist eine indirekte Führung des Kraftwagens mittels des Griffelements zweckmäßig. Mittels eines Steuerhebels kann eine intuitive Bedienung der bereits beschriebene Benutzerschnittstelle zum Auslösen von Fahrmanövers ermöglicht werden.

Im Betrieb des Griffelements als Steuerhebel wird zweckmäßigerweise mittels wenigstens eines Aktors der Bedieneinrichtung an dem Griffelement eine Kraft-Weg-Kennlinie eingestellt. Über eine solche Kennlinie ist es möglich, dem Benutzer der Bedieneinrichtung in Abhängigkeit von einer Auslenkung des Griffelements eine vorbestimmte Gegenkraft entgegenzusetzen. Hierdurch kann dem Benutzer dann durch eine Kraftsenke oder eine Kraftzunahme auf haptischem Wege eine Information übermittelt werden, wie beispielsweise eine besonders günstige Geschwindigkeits- oder Abstandseinstellung oder eine mit zunehmender Auslenkung des Griffelements verbundene Gefahr, das Fahrzeug zu weit an den Straßenrand zu führen.

Als ebenso zweckmäßig hat es sich erwiesen, mittels wenigstens eines Aktors an dem Griffelement eine Kraftrückkopplung für den Bediener der Bedieneinrichtung zu erzeugen. Anders als bei einer Kraft-Weg-Kennlinie kann der Steuerhebel dann zusätzlich gegen die Kraft der Hand des Bedieners in eine andere Richtung ausgelenkt werden. Hierdurch kann dem Bediener ein Eindruck von den tatsächlichen Straßenverhältnissen oder auch eine Bedienempfehlung vermittelt werden. Genauso können Parameter aus einer Umfeldwahrnehmung (Bildverarbeitung auf der Grundlage einer Kamera bzw. eines Radars) an den Benutzer kommuniziert werden.

Da während eines Wechsels zwischen zwei Assistenzmodi die Position des Griffelements verändert wird, muss hierbei sichergestellt sein, dass nicht die Hand der Bedienperson zwischen dem Griffelement und dem Gehäuse der Mittelkonsole bzw. der Seitenverkleidung eingeklemmt wird. Dies wird bevorzugt dadurch erreicht, dass in einem Abstand zum Griffelement eine Deaktivierungstaste im primären Greifraum bereitgestellt ist und die Fahrerassistenzeinrichtung dazu ausgelegt ist, bei einem Betätigen der Deaktivierungstaste den momentan aktiven Assistenzmodus zu deaktivieren. Bei einer Betätigung der Deaktivierungstaste durch den Bediener ist also sichergestellt, dass sich dessen Hand an der Deaktivierungstaste und nicht im Bereich des Griffelements befindet.

Bei dem erfindungsgemäßen Kraftwagen kann die Fahrerassistenzeinrichtung sehr flexibel zum Bedienen einer Vielzahl von unterschiedlichen Assistenzmodi verwendet werden. So sieht eine Ausführungsform des Kraftwagens vor, dass die Fahrerassistenzeinrichtung dazu ausgelegt ist, in einem teilautomatischen Assistenzmodus den Kraftwagens teilautomatisiert auf der Grundlage von Fahrparametern zu führen, die mittels der Bedieneinrichtung von einem Fahrer einstellbar sind. Durch Beibehalten einer entsprechenden mechanischen oder elektromechanischen Kopplung ist hierbei aber ermöglicht, dass der Fahrer mittels einer Lenkhandhabe, also etwa eines Lenkrads, und/oder mittels eines Pedals direkt in die Führung des Kraftwagens eingreift. Unter einer teilautomatisierten Führung durch das Fahrerassistenzsystem ist insbesondere zu verstehen, dass das Einstellen der Fahrgeschwindigkeit und das Einhalten eines Abstands des Kraftwagens zu einem voranfahrenden Fahrzeug durch die Fahrerassistenzeinrichtung durchgeführt wird.

Wie bereit erwähnt ist es auch möglicht, eine Ausführungsform des Kraftwagens zu realisieren, bei welcher die Fahrerassistenzeinrichtung dazu ausgelegt ist, in einem vollautomatischen Assistenzmodus den Kraftwagen durch eine selbständige Quer- und Längsführung vollautomatisch zu führen und hierbei vom Fahrer über eine Benutzerschnittstelle eine Auswahl eines von der Fahrerassistenzeinrichtung auszuführenden Fahrmanövers und/oder einen Wert zu einem Fahrparameter eines aktuell ausgeführten Fahrmanövers zu empfangen. Hierbei bietet es sich dann insbesondere an, das Griffelement als Steuerhebel zu betreiben, um die Fahrmanöver zu triggern beziehungsweise die Fahrparameter einzustellen. Bei der Benutzerschnittstelle kann es sich z.B. um diejenige handeln, die von der Anmelderin zusammen mit der vorliegenden Anmeldung am selben Tag zum Patent angemeldet wurde.

Bei dem erfindungsgemäßen Kraftwagen kann sogar vorgesehen sein, dass die Fahrerassistenzeinrichtung dazu ausgelegt ist, in einem autonomen Assistenzmodus den Kraftwagen in einem autonomen Assistenzmodus den Kraftwagen autonom durch eine selbständige Quer- und Längsführung vollautomatisch zu führen und hierbei auch selbständig einen Fahrparameterwert zu einem Fahrparameter eines aktuell ausgeführten Fahrmanövers festzulegen und/oder selbständig ein auszuführendes Fahrmanöver auszuwählen.

Im Zusammenhang mit dem autonomen Assistenzmodus beziehungsweise dem manuellen Assistenzmodus, in welchem kein Eingreifen der Fahrerassistenzeinrichtung in die Fahrzeugführung vorgesehen ist, ergibt sich eine vorteilhafte Weiterbildung des erfindungsgemäßen Kraftwagens, wenn die Steuereinrichtung dazu eingerichtet ist, in zumindest einem dieser Assistenzmodi das Griffelement in Anlage zu dem Gehäuse der Mittelkonsole bzw. der Verkleidung zu bringen oder darin zu versenken. Hierdurch ist dann ein Umgreifen des Griffelements durch einen Benutzer der Bedieneinrichtung unmöglich gemacht. Versucht also der Benutzer das Griffelement zu umgreifen, um eines von dessen Bedienelementen zu betätigen oder das Griffelement als Steuerhebel zu nutzen, so wird er durch die Position des Griffelements daran gehindert und daran erinnert, dass er im Moment nicht die Möglichkeit hat, die Fahrerassistenzeinrichtung zu bedienen.

In welche Position das Griffelement durch die Steuereinrichtung verfahren wird, wenn ein entsprechender Assistenzmodus eingeschaltet wird, ist zwar vorbestimmt, kann aber z.B. bei der Herstellung des Kraftwagens oder während einer Konfiguration durch einen Benutzer beliebig festlegbar sein. Bevorzugt ist vorgesehen, dass das Griffelement in Fahrzeuglängsrichtung mit zunehmendem Grad der Selbständigkeit der Fahrerassistenzeinrichtung in eine Position bewegt wird, die sich weiter weg vom Lenkrad befindet. In einer ganz besonders bevorzugten Ausführungsform sind vier Assistenzmodi vorgesehen, nämlich ein manueller Assistenzmodus, bei welchem gar keine Führung durch die Fahrerassistenzvorrichtung vorgesehen ist, ein teilautomatischer Assistenzmodus, bei welchem zumindest eine Fahrgeschwindigkeitsregelung bereitgestellt wird, ein vollautomatischer Assistenzmodus, in welchem zumindest eine selbständige Querführung vorgesehen ist, und ein autonomer Assistenzmodus, in welchem eine vollständig selbständige Führung des Kraftwagens durch die Fahrerassistenzeinrichtung ohne Eingriffsmöglichkeit des Fahrers vorgesehen ist. Bei Durchlaufen dieser Abfolge von Assistenzmodi durch entsprechendes Umschalten wird das Griffelement dabei schrittweise von vorn (manuelle Fahrt) auf der Mittelkonsole bei jedem Umschalten in eine Position weiter nach hinten verfahren, bis es schließlich an einer hinteren Wandung des Gehäuses der Mittelkonsole im autonomen Assistenzmodus zur Anlage kommt.

Im Zusammenhang mit dem erfindungsgemäßen Verfahren umfasst die hier beschriebene Erfindung auch Weiterbildungen, welche Merkmale umfassen, die bereits im Zusammenhang mit den Weiterbildungen des erfindungsgemäßen Kraftwagens beschrieben worden sind. Daher werden diese Weiterbildungen des erfindungsgemäßen Verfahrens hier nicht noch einmal erläutert.

Die Erfindung wird im Folgenden anhand von Ausführungsbeispielen näher erläutert. Dazu zeigt:
- Fig. 1: eine schematische Darstellung einer Mittelkonsole einer Ausführungsform des erfindungsgemäßen Kraftwagens in perspektivischer Ansicht und
- Fig. 2: eine schematische Darstellung eines Bewegungsablaufs eines Griffelements auf der Mittelkonsole von Fig. 1 in perspektivischer Ansicht.

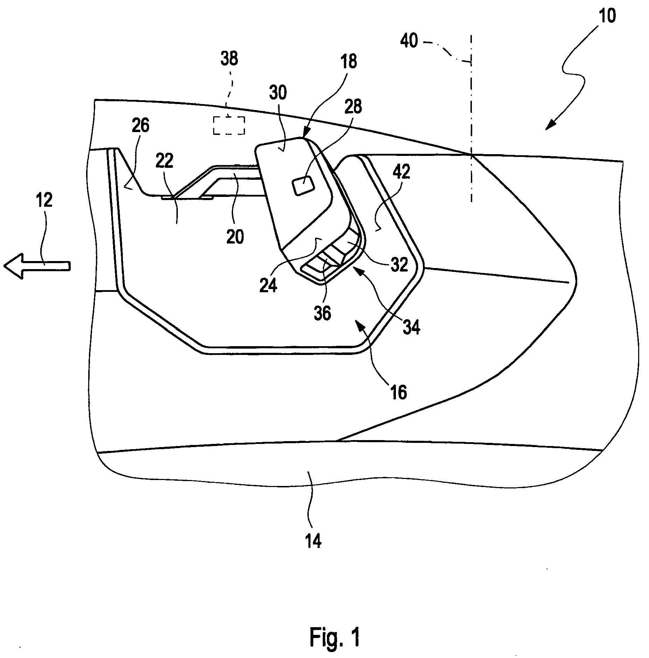

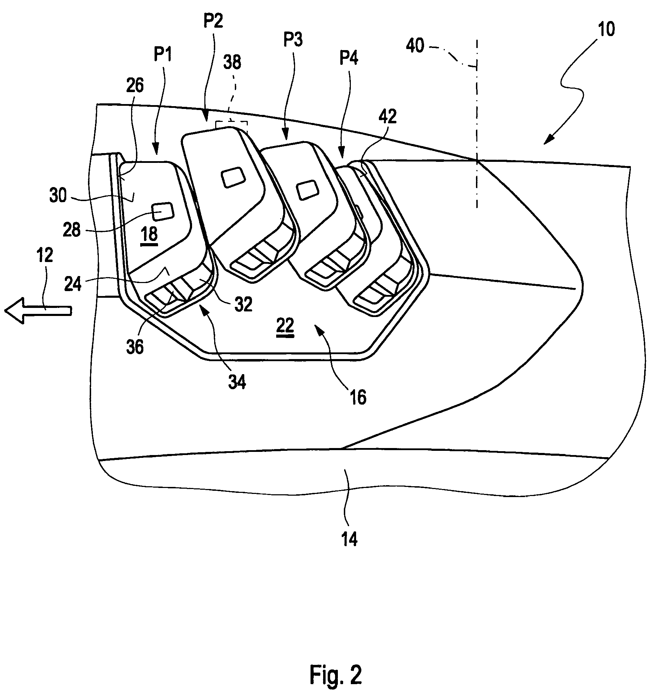

Die Beispiele stellen bevorzugte Ausführungsformen der Erfindung dar. In Fig. 1 ist eine Mittelkonsole 10 eines nicht weiter dargestellten Kraftwagens gezeigt. Bei dem Kraftwagen kann es sich beispielsweise um einen elektrisch oder mit einem Verbrennungsmotor angetriebenen Personenkraftwagen handeln. Die Mittelkonsole 10 befindet sich in Vorwärts-Fahrtrichtung 12 des Kraftwagens gesehen neben einem Fahrersitz 14. In der Mittelkonsole 10 ist eine Mulde 16 ausgebildet, in welcher ein Griffelement 18 von einem Trägerelement 20, beispielsweise einem Schenkel aus Metall, getragen wird. Das Griffelement 18 weist in dem in Fig. 1 gezeigten Beispiel eine Grundform eines Quader mit abgerundeten Ecken und Kanten, ähnlich einem Barren oder eines Brillenetuis. Es kann sich beispielsweise um einen mittels einer Spritzgusstechnik hergestellten Hohlkörper handeln, der mit Kunstleder verkleidet sein kann. Über das Trägerelement 20 ist das Griffelement 18 mit einem (nicht dargestellten) Aktor, etwa einem Elektromotor, mechanisch gekoppelt, welcher sich im Inneren einer Verschalung oder eines Gehäuses 22 der Mittelkonsole 10 befindet. Mittels des Aktors kann durch eine (nicht dargestellte) Steuereinheit eine Position des Griffelements 18 innerhalb der Mulde 16 verändert werden. In Fig. 2 ist in einer überlagerten Darstellung veranschaulicht, welche vier vorbestimmte Positionen P1, P2, P3, P4 das Griffelement 18 innerhalb der Mulde 14 einnehmen kann. Bei der Steuereinheit kann es sich beispielsweise um einen Mikrocontroller handeln.

Das Griffelement 18 bildet in den Positionen P2 und P3 einen Hebel, den ein auf dem Fahrersitz 14 sitzender Fahrer umgreifen kann und mit dem dieser eine Kraft über das Trägerelement 20 auf Sensoren im Inneren des Gehäuses 22 ausüben kann. Dieser Hebel verkörpert einen integrativen Ansatz, welcher die Bedienung eines Automationsspektrums einer Fahrerassistenzeinrichtung des Kraftwagens für den Fahrer vereinfacht. Bei aktiviertem Fahrerassistenzsystem kann in Abhängigkeit von einem Assistenzmodus eine Teil- und Vollautomation bis hin zur Autonomie bei der Führung des Kraftwagens durch das Fahrerassistenzsystem ermöglicht sein. Durch das Griffelement 18 und das Trägerelement 20 ist hierbei ein einziges Bedienteil in Hebelform bereitgestellt, wobei die Position des Griffelements 18 sowie die Bedieneigenschaften von einzelnen daran angeordneten Bedienelementen variabel sind und in Abhängigkeit von dem aktuell aktiven Assistenzmodus eingestellt werden können.

So werden für die manuelle Fahrt die etablierten Bedienelemente verwendet, das heißt das Lenkrad und die Pedalerie sind direkt mit der Lenkung des Kraftwagens beziehungsweise mit dem Motor gekoppelt. Das Griffelement 18 liegt in diesem manuellen Assistenzmodus der Fahrerassistenzeinrichtung bündig mit einer in Fahrtrichtung 12 vorderen Wandung 26 der Mulde 16 an (Position P1). Ein Umfassen des Griffelements 18 ist dann nicht möglich. Nach Betätigen einer Sensortaste 28 wird das Griffelement 18 von dem in der Mittelkonsole 10 befindlichen Aktor aus seiner bündigen Lage in die Position P2 verfahren. Durch das Drücken der Sensortaste 28 wird zugleich ein teilautomatischer Assistenzmodus bei der Fahrerassistenzeinrichtung aktiviert. Bei der Sensortaste 28 kann es sich beispielsweise um eine kapazitive Taste handeln. Die Taste 28 befindet sich auf einer Oberseite 30 des Griffelements 18, die in allen vier Positionen P1 bis P4 von dem Fahrer leicht erreichbar ist. Eine Tastfläche der Taste 28 ist bevorzugt kleiner als die Fläche der Seite 30, sodass ein Fahrer beim Umgreifen des Griffelements 18 die Taste 28 hierdurch nicht ungewollt betätigt.

Anstatt das Griffelement 18 im manuellen Assistenzmodus lediglich in Anlage zur Wandung 26 zu bringen, kann auch vorgesehen sein, einen Schacht in dem Gehäuse 22 vorzusehen, in welchem das Griffelement 18 versenkt werden kann. Hierbei ist dann darauf zu achten, dass die Sensortaste 28 erreichbar bleibt, um den nächsthöheren Assistenzmodus (hier also den teilautomatischen Assistenzmodus) aktivieren zu können. Die Sensortaste 28 wird nur aktiviert, falls durch die Fahrerassistenzeinrichtung erkannt wird, dass das Fahrzeug in dem teilautomatischen Assistenzmodus durch die Fahrerassistenzeinrichtung selbständig geführt werden kann.

Sobald das Griffelement 18 die Position P2 erreicht, erkennt der Fahrer an dessen Position P2, dass sich die Fahrerassistenzeinrichtung in dem teilautomatischen Assistenzmodus befindet. Hierbei ist die Fahrerassistenzeinrichtung dann zunächst im Stand-by-Betrieb, das heißt sie greift noch nicht in die Führung des Kraftwagens ein, kann aber durch Drücken einer SET-Taste 32 vom Fahrer aktiviert werden. Die SET-Taste 32 ist Teil eines Tastenfelds 34 an einer dem Fahrer zugewandten Stirnseite 24 des Griffelements 18. Das Tastenfeld 34 beinhaltet des Weiteren ein Bedienelement 36 zur Geschwindigkeitsverstellung, über welches im teilautomatischen Assistenzmodus eine Veränderung der Setzgeschwindigkeit erfolgt. Das Bedienelement 36 kann z.B. als Drehrad, monostabile Wippe oder Wipptaste ausgestaltet sein. Der teilautomatische Assistenzmodus lässt sich wieder deaktivieren, indem ein Bedienelement 38 betätigt wird, das in der Mittelkonsole im Umfeld des Griffelements 18 eingebaut ist. Bei dem Bedienelement 38 kann es sich beispielsweise um eine Deaktivierungstaste handeln. Durch eine Betätigung des Deaktivierungstaste 38 außerhalb des Griff- und Bewegungsbereichs für das Griffelement 18 ist keine Quetschgefahr gegeben.

Bei der Deaktivierungstaste 38 kann vorgesehen sein, dass durch verhältnismäßig kurzes Drücken der teilautomatische Assistenzmodus beibehalten wird und lediglich in den Stand-by-Betrieb gewechselt wird, während durch ein langes Drücken (so genannter "long-push") der Deaktivierungstaste 38 der teilautomatische Assistenzmodus deaktiviert und wieder in den manuellen Assistenzmodus gewechselt wird.

Im teilautomatischen Assistenzmodus (Position P2 des Griffelements 18) kann auch ein Sollabstand einer Längsregelung des Fahrerassistenzsystems durch eine Längsverschiebung des Griffelements 18 entlang der Fahrtrichtung 12 erfolgen. Der Sollabstand bildet hierbei einen Fahrparameter der Fahrerassistenzeinrichtung. Das Griffelement 18 ist hierzu in der Position P2 monostabil gelagert, d.h. es bewegt sich von selbst wieder in diese Position P2 zurück, wenn es losgelassen wird. Das Griffelement 18 wird zum Einstellen des Sollabstands solange aus der Position P2 ausgelenkt gehalten, bis sich eine Anzeige und/oder der tatsächliche Sollabstand auf das gewünschte Niveau einstellen.

Im teilautomatischen Assistenzmodus ist es dem Fahrer auch ermöglicht, durch Betätigen des Gaspedals oder des Bremspedals in die Längsführung einzugreifen und so die Fahrgeschwindigkeit zu verändern. Durch kurzes Auslenken des Griffelements 18 in Fahrzeuglängsrichtung 12 kann der Fahrer danach das Fahrerassistenzsystem wieder dazu veranlassen, die Fahrgeschwindigkeit des Kraftwagens auf die Setzgeschwindigkeit einzuregeln (so genannte Resume-Funktion). Die beschriebenen Auslenkungen des Griffelements 18 entlang der Fahrtrichtung 12 haben sich aus ergonomischer Sicht als besonders sinnvoll erwiesen. Im Zusammenhang mit einer anderen Ausgestaltung des Fahrzeuginneren kann es aber auch zweckmäßig sein, alternativ oder zusätzlich eine Bewegung nach hinten, also entgegen der Fahrtrichtung 12, oder auch quer zur Fahrtrichtung als weitere Betätigungshandlung zu ermöglichen.

Über die Sensortaste 28 auf der Oberseite 30 des Griffelements 18 und/oder eine manuelle Verstellung durch den Benutzer kann die nächst höhere Automationsstufe aktiviert werden, in welcher das Fahrerassistenzsystem den Kraftwagen führen kann. Hierbei wird das Griffelement 18 in die Position P3 gebracht. In diesem dann eingestellten vollautomatischen Assistenzmodus sind bis auf die Sensortaste 28 und die Deaktivierungstaste 38 die Betätigungselemente des Tastenfelds 34 ohne Funktion. Eine Parameter- und Manöverschnittstelle zur Bedienung des Fahrerassistenzsystems im vollautomatischen Assistenzmodus wird durch eine manuelle Auslenkbarkeit des Hebels in einer X-Y-Ebene senkrecht zur Fahrzeughochachse 40 realisiert. Die Parameter- und Manöverschnittstelle kann hierbei zusätzlich einen Bildschirm umfassen, auf welchem dem Fahrer angezeigt wird, welchen Sollabstand die Fahrerassistenzeinrichtung zu einem vorausfahrenden Fahrzeug einzuregeln versucht und welche Querlage der Kraftwagen auf der aktuell befahrenen Fahrspur einnehmen soll. Der Sollabstand und die Querlage sowie eine Sollgeschwindigkeit (für den Fall, dass kein Fahrzeug vorausfährt) bilden Fahrparameter im vollautomatischen Assistenzmodus. Indem nun der Fahrer am Griffelement 18 eine Kraft entlang der Fahrtrichtung 12 oder quer zu dieser auf das Trägerelement 20 ausübt, werden durch die Sensoren am Trägerelement 20 diese Betätigungshandlungen erfasst und entsprechend die Sollwerte im vollautomatischen Assistenzmodus eingestellt. In der Position P3 der Vollautomation ist das Griffelement 18 für den entspannt sitzenden Fahrer, der das Lenkrad nicht mehr betätigen muss, bequem und ohne großen Bewegungsaufwand zu erreichen. Nutzt der Fahrer das Griffelement 18 als Handablage, kann er über eine mittels der Aktoren in der Mittelkonsole 10 erzeugte Kraftrückkopplung der Parameter- und Manöverschnittstelle zusätzlich jederzeit über die aktuellen Sollwerte für die geregelte Führung des Kraftwagens durch das Fahrerassistenzsystem informiert werden. In diesem Fall ist die Position P3 des Griffelements 18 dann sowohl vom momentan aktiven Assistenzmodus (vollautomatischer Assistenzmodus) also auch von den Sollwerten abhängig, die dem Fahrer mittels der Kraftrückkopplung dargestellt werden.

Über das Griffelement 18 kann zusätzlich die Funktion einer Anfahrtriggerung realisiert sein. Hierdurch ist es dann möglich, nach einem automatischen Abbremsen des Kraftwagens durch das Fahrerassistenzsystem und vor einem automatischen Wiederanfahren von dem Fahrer eine Bestätigung zu erhalten, dass er auf das Wiederanfahren gefasst ist. Als Anfahrtrigger kann beispielsweise die SET-Taste 32 genutzt werden. Auch eine Potenzialtriggerung kann über das Griffelement 18 realisiert werden. Eine solche ist beispielsweise in der bereits genannten Druckschrift DE 10 2010 022 433 A1 beschrieben.

Im Zusammenhang mit der Bedienung der erwähnten Parameter- und Manöverschnittstelle kann auch vorgesehen sein, der Hand des Fahrers am Griffelement 18 eine Kraft entgegenzusetzen, die von einem der Aktoren in der Mittelkonsole 10 erzeugt wird. Hierdurch kann dem Fahrer durch eine Kraft-Weg-Kennlinie beim Auslenken des Griffelements 18 signalisiert werden, wo sich besonders günstige oder ungünstige Werte für die einzustellenden Fahrparameter ergeben. So kann dem Fahrer beispielsweise signalisiert werden, dass der von ihm eingestellte Abstand zum vorausfahrenden Fahrzeug zu gering wird, indem es dem Fahrer erschwert wird, das Griffelement 18 weiter in die Fahrtrichtung 12 auszulenken. Kraftsenken im Kraft-Weg-Verlauf ermöglichen das taktile Anzeigen eines günstigen Werts.

Das Fahrerassistenzsystem des Kraftwagens ist zusätzlich in der Lage, den Kraftwagen autonom zu führen. Hierbei wird dann durch das Fahrerassistenzsystem selbst entschieden, welchen Abstand zum vorausfahrenden Fahrzeug und welche Querlage der Kraftwagen auf einer Spur einnehmen soll. Genauso kann dann durch das Fahrerassistenzsystem ein Überholmanöver, ein Abbiegemanöver, ein Einparkmanöver und dergleichen selbständig begonnen und durchgeführt werden. Der autonome Assistenzmodus des Fahrerassistenzsystems lässt sich hierbei nur aktivieren, wenn durch das Fahrerassistenzsystem erkannt wird, dass das Fahrzeug auch ohne Zutun des Fahrers jederzeit in einen sicheren Zustand verbracht werden kann, also das Fahrzeug beispielsweise zum Stillstand gebracht werden kann. Denkbar ist ein solcher autonomer Modus beispielsweise im Rahmen einer Stausituation, wenn der Kraftwagen nur mit Schrittgeschwindigkeit geführt werden kann.

Bietet sich der autonome Modus bei gegebenen Einschaltbedingungen zur Aktivierung an, kann er vom Fahrer durch eine Betätigung der Sensortaste 28 auf der Oberfläche 30 des Hebels aktiviert werden. Außer dem autonomen Assistenzmodus ist analog der Position P1 der manuellen Fahrt keine Betätigung des Griffelements 18 und der darauf befindlichen Tasten des Tastenfelds 34 vorgesehen. Lediglich eine manuelle Deaktivierung über die Deaktivierungstaste 38 muss sichergestellt sein. Im autonomen Assistenzmodus wird das Griffelement 18 deshalb wieder in eine bündige Stellung mit einer Wandung 42 der Mulde 14 verfahren. Diese Position P4 des Griffelements 18 im autonomen Assistenzmodus unterscheidet sich für den Fahrer deutlich erkennbar von der Position P1 im manuellen Assistenzmodus.

Wird der autonome Assistenzmodus durch Betätigen der Deaktivierungstaste 38 wieder deaktiviert, verfährt das Griffelement 18 automatisch in eine Rückfallposition, beispielsweise in die Position P2, wo dann der Stand-by-Betrieb des teilautomatischen Assistenzmodus aktiviert werden kann.

In der folgenden Tabelle sind noch einmal die Bedienmöglichkeiten zusammengefasst, die dem Fahrer über das Griffelement 18 und die Deaktivierungstaste 38 in Abhängigkeit von den unterschiedlichen Assistenzmodi geboten werden, indem den einzelnen Bedienelemente jeweils Funktionalitäten des Fahrerassistenzsystems zugeordnet werden.

| Manuelle Fahrt (P1) | | |
|---|---|---|
| Funktion | Bedienung | Erklärung |
| Wechsel in die Teilautomation | Taste 28 | Hebel wird verfahren |

| Teil-Automation (P2) | | |
|---|---|---|
| Funktion | Bedienung | Erklärung |
| Stand-by-Betrieb | Taste 38 | Taste auf Mittelkonsole |
| SET | Taste 32 | |
| Geschwindigkeitseinstellung | Taste 36 | |
| Einstellen der Sollzeitlücke | Griffelement in ±x lang antippen | Fahrtrichtung 12 entspricht der -x-Richtung |
| Resume und Anfahrtrigger | Griffelement 18 in ±x kurz antippen | |
| Wechsel in die Vollautomation | Taste 28 | Sensortaste |
| OFF | Taste 38 (lang tippen) | Taste auf Mittelkonsole |

| Vollautomation (P3) | | |
|---|---|---|
| Funktion | Bedienung | Erklärung |
| Anfahrtrigger Potentialtrigger | Taste 32 | |
| Manöverschnittstelle | Griffelement verschieben in der X-Y-Ebene | Monostabile Auslenkung senkrecht zur Fahrzeughochachse |
| Wechsel in die Autonomie | Taste 28 | Sensortaste |
| Deaktivierung der Vollautomation | Taste 38 | Taste auf Mittelkonsole |
| Autonomie (P4) | | |
| Deaktivierung der Autonomie | Taste 38 | Taste auf Mittelkonsole |

Die Beispiele zeigen, wie durch die Zeigerwirkung des Griffelements (Positionen P1 bis P4) in Abhängigkeit von den unterschiedlichen Graden der Selbständigkeit der Assistenzmodi des Fahrerassistenzsystems und die modusabhängigen Bedienmöglichkeiten des Griffelements 18 und seiner Bedienelemente eine stark systemspezifische Darstellung und Bedienbarkeit der Fahrerassistenzeinrichtung in den jeweiligen Assistenzmodi vermittelt wird. Dies erhöht die Systemtransparenz und vereinfacht die Erlernbarkeit des Automationsspektrums für den Fahrer. Durch die beschriebene aktive Rückmeldung des Griffelements 18 im vollautomatischen Assistenzmodus ist zudem auch während beispielsweise einer Bedienung eines Infotainmentsystems die Möglichkeit der Kommunikation des Zustands der "Regelstrecke Fahrzeug" (das heißt die Darstellung der Sollwerte der Fahrparameter, durch welche das Führverhalten der Fahrerassistenzeinrichtung festgelegt ist) an den Fahrer vermittelbar. Die in Fahrtrichtung 12 variable Position des Stellteils in Abhängigkeit von dem momentan aktiven Assistenzmodus ermöglicht zudem ein für die Bedienung durch einen Fahrer optimale Positionierung der Bedienelemente für den teilautomatischen und den vollautomatischen Assistenzmodus in Relation zum Lenkrad. Ein problemloses Umgreifen des Griffelements in diesen Assistenzmodi und eine bequeme Sitzposition mit guter Erreichbarkeit des Griffelements 18 können so bei dem Kraftwagen realisiert werden.

## Patentansprüche

1. Kraftwagen mit einer Fahrerassistenzeinrichtung,
- welche dazu ausgelegt ist, den Kraftwagen selbständig während einer Fahrt des Kraftwagens zu führen, und
- welche hierbei zwischen zumindest zwei Assistenzmodi umschaltbar ist, die sich in einem Grad der Selbständigkeit der Fahrerassistenzeinrichtung beim Führen des Kraftwagens voneinander unterscheiden, und
- die Fahrerassistenzeinrichtung eine Bedieneinrichtung in einem für einen Fahrer des Kraftwagens primären Greifraum angeordneten Griffelement (18) aufweist, auf dem eine Mehrzahl von Bedienelementen (28, 34) angeordnet ist,
**dadurch gekennzeichnet, dass**
- das Griffelement (18) bezüglich einer Innenverkleidung (22) des Kraftwagens durch einen Aktor der Bedieneinrichtung bewegbar ist und
- eine Steuereinrichtung der Fahrerassistenzeinrichtung eine Position (P1 bis P4) des Griffelements (18) bezüglich der Innenverkleidung (22) durch Ansteuern des Aktors in Abhängigkeit von dem momentan aktiven Assistenzmodus einstellt, wobei bei der Fahrerassistenzeinrichtung in einem autonomen Assistenzmodus eine vollständig selbständige Führung des Kraftwagens, in einem vollautomatischen Assistenzmodus zumindest eine selbständige Querführung, in einem teilautomatischen Assistenzmodus zumindest eine Fahrgeschwindigkeitsregelung und in einem manuellen Assistenzmodus gar keine Führung vorgesehen ist und hierbei durch die Steuereinrichtung den Assistenzmodi in der genannten Reihenfolge jeweils eine Position (P4, P3, P2, P1) des Griffelements (18) zugeordnet ist, die näher an einem Lenkrad des Kraftwagens liegt,
und hierdurch das aktiv verstellbare Griffelement (18) mit den darin integrierten Bedienelementen (28, 34) für die Bedienung des Automationsspektrums, wie es durch die manuelle Fahrt, den teil- und den vollautomatischen Assistenzmodus sowie den autonomen Assistenzmodus bereitgestellt ist, eine Orientierung anhand des einzigen Griffelements (18) bietet, indem die Position (P4, P3, P2, P1) des Griffelements (18) sowie Bedieneigenschaften der einzelnen Bedienelemente (28, 34) variabel und abhängig vom aktuell gewählten Assistenzmodus adaptiert sind.

2. Kraftwagen nach Anspruch 1, wobei das Griffelement (18) an einer einem Fahrersitz (14) des Kraftwagens zugewandten Stirnseite wenigstens ein Bedienelement (32, 36), insbesondere wenigstens einen Tastschalter, aufweist und das Bedienelement (32, 34) in zumindest einem der Assistenzmodi dazu dient, einen Fahrparameter der Fahrerassistenzeinrichtung einzustellen, wobei von dem Fahrparameter das Führverhalten der Fahrerassistenzeinrichtung abhängig ist.

3. Kraftwagen nach Anspruch 1 oder 2, wobei zum Wechseln zwischen zwei Assistenzmodi das Griffelement (18) ein Bedienelement (28) an einer Seite (30) aufweist, welche für einen Benutzer der Bedieneinrichtung zumindest in einer überwiegenden Anzahl der möglichen Positionen (P1 bis P4) des Griffelements (18) erreichbar ist, wobei die Fahrerassistenzeinrichtung dazu ausgelegt ist, bei einem Betätigen des Bedienelements (28) den momentan aktiven Assistenzmodus zu wechseln.

4. Kraftwagen nach einem der vorhergehenden Ansprüche, wobei die Steuereinrichtung dazu ausgelegt ist, das Griffelement (18) in zumindest einem Assistenzmodus als Steuerhebel zu betreiben, welcher durch Kippen und/oder Drehen und/oder translatorisches Auslenken quer zu einer Hochachse (14) des Kraftwagens aus der Position (P2, P3), in die es in dem Assistenzmodus durch die Steuereinrichtung gebracht worden ist, monostabil auslenkbar ist.

5. Kraftwagen nach Anspruch 4, wobei die Steuereinrichtung dazu ausgelegt ist, im Betrieb des Griffelements (18) als Steuerhebel mittels wenigstens eines Aktors der Bedieneinrichtung an dem Griffelement (18) eine Kraft-Weg-Kennlinie einzustellen.

6. Kraftwagen nach Anspruch 4 oder 5, wobei die Steuereinrichtung dazu ausgelegt ist, im Betrieb des Griffelements (18) als Steuerhebel mittels wenigstens eines Aktors an dem Griffelement (18) eine Kraftrückkopplung für einen Bediener der Bedieneinrichtung zu erzeugen.

7. Kraftwagen nach einem der vorhergehenden Ansprüche, wobei in einem Abstand zum Griffelement (18) eine Deaktivierungstaste (38) im primären Greifraum (22) bereitgestellt ist und die Fahrerassistenzeinrichtung dazu ausgelegt ist, bei einem Betätigen der Deaktivierungstaste (38) den momentan aktiven Assistenzmodus zu deaktivieren.

8. Kraftwagen nach einem der vorhergehenden Ansprüche, wobei die Fahrerassistenzeinrichtung dazu ausgelegt ist, in einem teilautomatischen Assistenzmodus den Kraftwagen teilautomatisiert auf der Grundlage von Fahrparametern zu führen, die mittels der Bedieneinrichtung von dem Fahrer einstellbar sind, und hierbei durch Beibehalten einer entsprechenden mechanischen Kopplung zu ermöglichen, dass der Fahrer mittels einer Lenkhandhabe und/oder eines Pedals direkt in die Führung des Kraftwagens eingreift.

9. Kraftwagen nach einem der vorhergehenden Ansprüche, wobei die Fahrerassistenzeinrichtung dazu ausgelegt ist, in einem vollautomatischen Assistenzmodus den Kraftwagen durch eine selbständige Quer- und Längsführung vollautomatisch zu führen und hierbei vom Fahrer über eine Benutzerschnittstelle eine Auswahl eines von der Fahrerassistenzeinrichtung auszuführenden Fahrmanövers und/oder einen Wert zu einem Fahrparameter eines aktuell ausgeführten Fahrmanövers zu empfangen.

10. Kraftwagen nach einem der vorhergehenden Ansprüche, wobei die Fahrerassistenzeinrichtung dazu ausgelegt ist, in einem autonomen Assistenzmodus den Kraftwagen autonom durch eine selbständige Quer- und Längsführung vollautomatisch zu führen und hierbei auch selbständig einen Fahrparameterwert zu einem Fahrparameter eines aktuell ausgeführten Fahrmanövers festzulegen und/oder eine selbständige Entscheidung über durchzuführende Fahrmanöver zu treffen.

11. Kraftwagen nach einem der vorhergehenden Ansprüche, wobei die Steuereinrichtung dazu eingerichtet ist, in zumindest einem Assistenzmodus das Griffelement (18) in Anlage zu einer Innenverkleidung (22) des Kraftwagens zu bringen oder in der Innenverkleidung (22) zu versenken und hierdurch ein Umgreifen des Griffelements (18) durch einen Benutzer der Bedieneinrichtung unmöglich zu machen.

12. Verfahren zum Betreiben eines Kraftwagens, indem eine Position eines Griffelements (18) einer Bedieneinrichtung durch eine Steuereinrichtung mittels Aktoren in Abhängigkeit davon eingestellt wird, in welchem Assistenzmodus momentan ein Fahrerassistenzsystem des Kraftwagens betrieben wird, wobei das Fahrerassistenzsystem zum selbständigen Führen des Kraftwagens ausgelegt ist und wobei durch das Einstellen der Position die relative Lage des Griffelements (18) bezüglich eines Fahrers des Kraftwagens verändert wird,
**dadurch gekennzeichnet, dass**
bei der Fahrerassistenzeinrichtung in einem autonomen Assistenzmodus eine vollständig selbständige Führung des Kraftwagens, in einem vollautomatischen Assistenzmodus zumindest eine selbständige Querführung, in einem teilautomatischen Assistenzmodus zumindest eine Fahrgeschwindigkeitsregelung und in einem manuellen Assistenzmodus gar keine Führung vorgesehen ist und hierbei durch die Steuereinrichtung den Assistenzmodi in der genannten Reihenfolge jeweils eine Position (P4, P3, P2, P1) des Griffelements (18) zugeordnet ist, die näher an einem Lenkrad des Kraftwagens liegt, und hierdurch das aktiv verstellbare Griffelement (18) mit den darin integrierten Bedienelementen (28, 34) für die Bedienung des Automationsspektrums, wie es durch die manuelle Fahrt, den teil- und den vollautomatischen Assistenzmodus sowie den autonomen Assistenzmodus bereitgestellt wird, eine Orientierung anhand des einzigen Griffelements (18) bietet, indem die Position (P4, P3, P2, P1) des Griffelements (18) sowie Bedieneigenschaften der einzelnen Bedienelemente (28, 34) variabel und abhängig vom aktuell gewählten Assistenzmodus adaptiert werden.

## Claims

1. Motor vehicle with a driver assistance system
- which is designed to drive the motor vehicle automatically during a journey of the motor vehicle, and
- which can be switched between at least two assistance modes which differ from each other in a degree of autonomy of the driver assistance system when the motor vehicle is being driven, and
- the driver assistance system has an operating device in a grip element (18) which is arranged in a primary gripping area for the driver of the motor vehicle and on which a plurality of operating elements (28, 34) is arranged, **characterised in that**
- the grip element (18) can be moved with regard to an inner trim (22) of the motor vehicle by an actuator of the operating system
- a control device of the driver assistance system sets a position (P1 to P4) of the grip element (18) in relation to the inner trim (22) by controlling the actuator as a function of the currently active assistance mode, wherein with the driver assistance system in an autonomous assistance mode completely autonomous driving of the motor vehicle, in a fully automatic assistance mode at least independent lateral control, in a partly automatic assistance mode at least a speed regulation and in a manual assistance mode no control is envisaged, and here through the control device the assistances modes are in the above sequence each assigned a position (P4, P3, P2, P1) of the grip element (18) which is closer to a steering wheel of the motor vehicle,
and through this, the actively adjustable grip element (18) with the integrated operating elements (28, 34) for operating the automation spectrum, as provided by the manual drive, partial and fully automatic assistance mode as well as the autonomous assistance mode, offers orientation by means of the single grip element (18) **in that** the position (P4, P3, P2, P1) of the grip element (18) as well as the operating properties of the individual operating elements (28, 34) are variable and dependent on the currently selected assistance mode.

2. Motor vehicle according to claim 1, wherein the grip element (18), on a side facing the driver's seat (14) of the motor vehicle, has at least one operating element (32, 36), more particularly at least one push-button switch and the operating element (32, 34) in at least one of the assistance modes serves to set one driving parameter of the driver assistance system, wherein the driving behaviour of the driver assistance system is dependent on the driving parameter.

3. Motor vehicle according to claim 1 or 2, wherein for changing between two assistance modes the grip element (18) has an operating element (28) on one side (30), which can be reached by a user of the operating device at least in a predominant number of the possible positions (P1 to P4) of the grip element (18), wherein the driver assistance system is designed, on operation of the operating element (28), to change the currently active assistance mode.

4. Motor vehicle according to any one of the preceding claims wherein the control device is designed to operate the grip element (18) in at least one assistance mode as a control lever which through tilting and/or turning and/or translational deflection perpendicularly to vertical axis (14) of the motor vehicle can be monostably moved from the position (P2, P3) into which it has been brought in assistance mode by the control device.

5. Motor vehicle according to claim 4, wherein the control device is designed, during operation of the grip element (18) as a control lever, to set a force-displacement characteristic by means of at least one actuator of the operating device on the grip element (18).

6. Motor vehicle according to claim 4 or 5 wherein the control unit is designed, during operation of the grip element (18) as a control lever, to produce by means of at least one actuator on the grip element (18) a force feedback for a user of the operating device.

7. Motor vehicle according to any one of the preceding claims, wherein at a distance from the grip element (18) a deactivation button (38) is provided in the primary grip area (22) and the driver assistance system is designed, on operation of the deactivation button (38), to deactivate the currently active assistance mode.

8. Motor vehicle according to any one of the preceding claims wherein the driver assistance system is designed in partial automatic assistance mode to drive the motor vehicle partially automatically on the basis of drive parameters that the driver can set by means of the operating device, and, through retaining a corresponding mechanical coupling to make it possible for the driver to intervene directly in the driving of the motor vehicle by means of a steering device and/or a pedal.

9. Motor vehicle according to any one of the preceding claims wherein the driver assistance system is designed in fully automatic assistance mode to drive the motor vehicle fully automatically through automatic lateral and longitudinal control and to receive from the driver via a user interface a selection of a driving manoeuvres to be carried out by the driver assistance system and/or a value of a driving parameter of driving manoeuvre currently being performed.

10. Motor vehicle according to any one of the preceding claims wherein the driver assistance system is designed in autonomous assistance mode to autonomously drive the motor vehicle fully automatically though independent lateral and longitudinal control and also to autonomously determine a driving parameter value for a driving parameter of a driving manoeuvre currently being performed and/or to make an autonomous decision on a driving manoeuvre to be carried out.

11. Motor vehicle according to any one of the preceding claims wherein the control device is designed in at least one assistance mode to bring the grip (18) into contact with an interior trim (22) of the motor vehicle or to insert it in the interior trim (22) thereby making it impossible for the grip element (18) to be grasped by a user of the operating device.

12. Method of operating a motor vehicle in which a position of a grip element (18) of an operating device is set by actuators in a control device as a function of the assistance mode the motor vehicle is currently being operated in, wherein the driver assistance system is designed to autonomously drive the motor vehicle and wherein through setting the position, the relative position of the grip element (18) to a driver of the motor vehicle is changed, **characterised in that**
with the driver assistance system in an autonomous assistance mode completely autonomous driving of the motor vehicle, in a fully automatic assistance mode at least independent lateral control, in a partly automatic assistance mode at least a speed regulation and in a manual assistance mode no control is envisaged, and here through the control device the assistance modes are in the above sequence each assigned a position (P4, P3, P2, P1) of the grip element (18) which is closer to a steering wheel of the motor vehicle, and through this the actively adjustable grip element (18) with the integrated operating elements (28, 34) for operating the automation spectrum, as provided by the manual driving, the partially and fully automatic assistance mode and the autonomous assistance mode, offers orientation by way of the single grip element (18) **in that** the position (P4, P3, P2, P1) of the grip element (18) as well as the operating properties of the individual operating elements (28, 34) are adapted variably and as a function of the currently selected assistance mode.

## Revendications

1. Véhicule automobile avec un dispositif d'assistance au conducteur,
- qui est conçu pour guider indépendamment le véhicule automobile pendant un trajet du véhicule automobile, et
- qui peut alors être commuté entre au moins deux modes d'assistance qui se différencient l'un de l'autre par le degré d'indépendance du dispositif d'assistance au conducteur lors du guidage du véhicule automobile, et
- le dispositif d'assistance au conducteur comportant un dispositif de commande dans un élément formant poignée (18) qui est agencé dans un espace de manipulation primaire pour un conducteur du véhicule automobile et sur lequel plusieurs éléments de commande (28, 34) sont agencés,
**caractérisé en ce que**
- l'élément formant poignée (18) peut être déplacé par rapport à un revêtement intérieur (22) du véhicule automobile par un actionneur du dispositif de commande,
- un dispositif de contrôle du dispositif d'assistance au conducteur règle une position (P1 à P4) de l'élément formant poignée (18) par rapport au revêtement intérieur (22) en commandant l'actionneur en fonction du mode d'assistance momentanément actif, étant prévus au niveau du dispositif d'assistance au conducteur : un guidage complètement indépendant du véhicule automobile dans un mode d'assistance autonome, au moins un guidage transversal indépendant dans un mode complètement automatique, au moins une régulation de vitesse de conduite dans un mode partiellement automatique et aucun guidage dans un mode d'assistance manuel, et une position (P4, P3, P2, P1) de l'élément formant poignée (18), laquelle position se situe plus près d'un volant du véhicule automobile, étant alors associée à chaque fois par le dispositif de contrôle aux modes d'assistance dans l'ordre mentionné, et
- l'élément formant poignée (18) pouvant être positionné de façon active offre ainsi avec les éléments de commande (28, 34) intégrés à l'intérieur, pour la commande du spectre d'automatismes tel qu'il est mis à disposition par la conduite manuelle, par les modes d'assistance partiellement automatique et complètement automatique ainsi que par le mode d'assistance autonome, une orientation à l'aide de l'unique élément formant poignée (18) du fait que la position (P4, P3, P2, P1) de l'élément formant poignée (18) ainsi que des propriétés de commande des différents éléments de commande (28, 34) sont adaptées de manière variable et en fonction du mode d'assistance momentanément sélectionné.

2. Véhicule automobile selon la revendication 1, dans lequel l'élément formant poignée (18) comporte au moins un élément de commande (32, 36), notamment au moins un bouton-poussoir, sur un côté frontal proche d'un siège de conducteur (14) du véhicule automobile et dans lequel l'élément de commande (32, 34) sert au moins dans l'un des modes d'assistance à régler un paramètre de conduite du dispositif d'assistance au conducteur, le comportement de guidage du dispositif d'assistance au conducteur étant dépendant du paramètre de conduite.

3. Véhicule automobile selon la revendication 1 ou 2, dans lequel, pour changer entre deux modes d'assistance, l'élément formant poignée (18) comporte un élément de commande (28) sur un côté (30) qui peut être atteint par un utilisateur du dispositif de commande au moins dans un nombre majoritaire des positions possibles (P1 à P4) de l'élément formant poignée (18), le dispositif d'assistance au conducteur étant conçu pour changer le mode d'assistance momentanément actif lors d'un actionnement de l'élément de commande (28).

4. Véhicule automobile selon l'une des revendications précédentes, dans lequel le dispositif de contrôle est conçu pour faire fonctionner l'élément formant poignée (18) dans au moins un mode d'assistance comme levier de commande qui peut être dévié de façon monostable par basculement et/ou rotation et/ou translation transversalement à un axe vertical (14) du véhicule automobile hors de la position (P2, P3) dans laquelle il a été mis par le dispositif de contrôle dans le mode d'assistance.

5. Véhicule automobile selon la revendication 4, dans lequel le dispositif de contrôle est conçu pour, dans le cas du fonctionnement de l'élément formant poignée (18) comme levier de commande, régler une courbe caractéristique force-course au moyen d'au moins un actionneur du dispositif de commande sur l'élément formant poignée (18).

6. Véhicule automobile selon la revendication 4 ou 5, dans lequel le dispositif de contrôle est conçu pour, dans le cas du fonctionnement de l'élément formant poignée (18) comme levier de commande, produire une réaction de force pour un utilisateur du dispositif de commande au moyen d'au moins un actionneur sur l'élément formant poignée (18).

7. Véhicule automobile selon l'une des revendications précédentes, dans lequel une touche de désactivation (38) est prévue dans l'espace de manipulation primaire (22) à une certaine distance de l'élément formant poignée (18) et dans lequel le dispositif d'assistance au conducteur est conçu pour désactiver le mode d'assistance momentanément actif lors d'un actionnement de la touche de désactivation (38).

8. Véhicule automobile selon l'une des revendications précédentes, dans lequel le dispositif d'assistance au conducteur est conçu pour, dans un mode d'assistance partiellement automatique, guider le véhicule automobile de manière partiellement automatisée sur la base de paramètres de conduite qui sont réglables par le conducteur au moyen du dispositif de commande et pour permettre ainsi, en conservant un couplage mécanique correspondant, que le conducteur intervienne directement dans le guidage du véhicule automobile au moyen d'une manette de direction et/ou d'une pédale.

9. Véhicule automobile selon l'une des revendications précédentes, dans lequel le dispositif d'assistance au conducteur est conçu pour, dans un mode d'assistance complètement automatique, guider le véhicule automobile de manière complètement automatique par un guidage transversal et longitudinal indépendant et pour recevoir alors du conducteur, par l'intermédiaire d'une interface d'utilisateur, une sélection d'une manoeuvre de conduite à réaliser par le dispositif d'assistance au conducteur et/ou une valeur pour un paramètre de conduite d'une manoeuvre de conduite actuellement réalisée.

10. Véhicule automobile selon l'une des revendications précédentes, dans lequel le dispositif d'assistance au conducteur est conçu pour, dans un mode d'assistance autonome, guider le véhicule automobile de manière autonome et complètement automatique avec un guidage transversal et longitudinal indépendant et pour spécifier ainsi également de manière indépendante une valeur de paramètre de conduite pour un paramètre de conduite d'une manoeuvre de conduite actuellement réalisée et/ou pour prendre une décision indépendante concernant des manoeuvres de conduite à effectuer.

11. Véhicule automobile selon l'une des revendications précédentes, dans lequel le dispositif de contrôle est conçu pour, au moins dans un mode d'assistance, mettre l'élément formant poignée (18) en appui contre un revêtement intérieur (22) du véhicule automobile ou le plonger dans le revêtement intérieur (22) et rendre ainsi impossible une saisie de l'élément formant poignée (18) par un utilisateur du dispositif de commande.

12. Procédé de fonctionnement d'un véhicule automobile, selon lequel une position d'un élément formant poignée (18) d'un dispositif de commande est réglée par un dispositif de contrôle au moyen d'actionneurs en fonction du mode d'assistance dans lequel un système d'assistance au conducteur du véhicule automobile fonctionne momentanément, le système d'assistance au conducteur étant conçu pour le guidage indépendant du véhicule automobile et la position relative de l'élément formant poignée (18) par rapport à un conducteur du véhicule automobile étant modifiée par le réglage de la position,
**caractérisé en ce que**
il est prévu un guidage complètement indépendant du véhicule automobile lorsque le dispositif d'assistance au conducteur est dans un mode d'assistance autonome, au moins un guidage transversal indépendant lorsque le dispositif d'assistance au conducteur est dans un mode d'assistance complètement automatique, au moins une régulation de vitesse de conduite lorsque le dispositif d'assistance au conducteur est dans un mode d'assistance partiellement automatique et aucun guidage lorsque le dispositif d'assistance au conducteur est dans un mode d'assistance manuel
et une position (P4, P3, P2, P1) de l'élément formant poignée (18), laquelle position se situe plus près d'un volant du véhicule automobile, est alors associée à chaque fois par le dispositif de contrôle aux modes d'assistance dans l'ordre mentionné,
et l'élément formant poignée (18) pouvant être positionné de façon active offre ainsi avec les éléments de commande (28, 34) intégrés à l'intérieur, pour la commande du spectre d'automatismes tel qu'il est mis à disposition par la conduite manuelle, par les modes d'assistance partiellement automatique et complètement automatique ainsi que par le mode d'assistance autonome, une orientation à l'aide de l'unique élément formant poignée (18) du fait que la position (P4, P3, P2, P1) de l'élément formant poignée (18) ainsi que des propriétés de commande des différents éléments de commande (28, 34) sont adaptées de manière variable et en fonction du mode d'assistance momentanément sélectionné.
